Europäisches Patentamt

European Patent Office

Office européen des brevets

(19)

(11) Numéro de publication : **0 500 484 A1**

(12) **DEMANDE DE BREVET EUROPEEN**

(21) Numéro de dépôt : **92460006.7**

(22) Date de dépôt : **04.02.92**

(51) Int. Cl.⁵ : **A01G 31/02**

(30) Priorité : **19.02.91 FR 9102121**

(43) Date de publication de la demande :
**26.08.92 Bulletin 92/35**

(84) Etats contractants désignés :
**BE NL**

(71) Demandeur : **PREMEL CABIC**
**Z.A. de Kerscao**
**F-29430 Plounevez Lochrist (FR)**

(72) Inventeur : **Premel Cabic, François**
**Kerscao**
**F-29430 Plounevez Lochrist (FR)**
Inventeur : **Pluchon, Jean-Yves**
**Kerneizon**
**F-29233 Cleder (FR)**

(74) Mandataire : **Le Faou, Daniel et al**
**Cabinet Regimbeau 11, rue Franz Heller,**
**Centre d'Affaires Patton B.P. 19107**
**F-35019 Rennes Cédex (FR)**

(54) Procédé et installation de régulation en température pour une culture de végétaux.

(57)    Procédé et installation de régulation en température pour une culture de végétaux, par exemple pour le forçage d'endives ; les végétaux (71), dont la culture est pratiquée à l'intérieur d'un local (100), sont alimentés en permanence au moyen d'une solution nutritive (60), et on effectue à la fois la régulation de la température d'air du local et celle de la température de cette solution (60) ; conformément à l'invention, la régulation de la solution nutritive est faite en référence à celle de l'air, par un asservissement qui tient compte de l'écart entre la température de la solution et celle de l'air, et la variation de cet écart par rapport à une valeur de consigne.

    Régulation thermique d'une culture en milieu hydroponique.

FIG. 2

**EP 0 500 484 A1**

La présente invention concerne un procédé de régulation en température pour une culture de végétaux qui est pratiquée à l'intérieur d'un local, par exemple pour le forçage d'endives.

Elle concerne également une installation servant à la mise en oeuvre de ce procédé.

La culture de certains végétaux se fait à l'intérieur d'un local dans lequel les végétaux sont alimentés en permanence à l'aide d'une solution nutritive, celle-ci étant constituée d'eau qui contient des agents nutritifs appropriés.

Cette technique de culture, couramment appellée culture en milieu hydroponique, est particulièrement utilisée pour le forçage d'endives.

Les racines d'endives récoltées en pleine terre sont placées côte-à-côte dans des casiers ou clayettes empilables à fond percé. Les casiers sont empilés et introduits dans une salle de forçage, dans une enceinte non éclairée, si bien que les endives se développent à l'abri de la lumière.

Chaque pile de casiers est surplombée par un conduit d'alimentation. Celui-ci amène au casier situé en haut de la pile la solution nutritive qui a été pompée dans un bac. La solution imprègne les racines du casier supérieur, puis s'écoule par gravité de casier en casier jusqu'au casier inférieur. Les ouvertures percées au fond des caissons sont décalées d'un casier au casier suivant de manière à donner à la solution qui s'écoule une trajectoire en chicane, ce qui permet d'assurer une irrigation régulière de l'ensemble des racines. Des gouttières appropriées assurent ensuite le retour de la solution du casier inférieur au bac.

Le bac est à un niveau constant ; il est réapprovisionné en permanence, soit automatiquement soit de manière manuelle, en eau et en agents nutritifs afin de compenser la consommation due à son absorption par les racines d'endives et à l'évaporation.

Dans une salle de forçage, il est généralement prévu plusieurs travées de casiers, qui correspondent à des familles d'endives d'âges différents. La durée de forçage est de 21 jours. Lorsqu'une travée est arrivée à maturité, elle est retirée du local pour être traitée, puis commercialisée. Le traitement consiste à séparer l'endive du reste de racine (ou "carotte") puis à éliminer certaines feuilles extérieures irrégulières. Cette opération est appelée "parement" de l'endive. Les endives sont enfin conditionnées, en vue de leur expédition sur les lieux de vente.

Après qu'une travée d'endives arrivée à maturité ait été retirée du local de forçage, elle est remplacée, bien entendu, par une nouvelle travée contenant des racines à forcer.

Il est généralement prévu plusieurs bacs d'approvisionnement de la culture en solution nutritive. Chacun des bacs va servir à l'alimentation d'une même famille d'endives, ou à plusieurs familles ayant des âges de développement voisins, qui requièrent des conditions similaires d'alimentation sur les plans de la qualité (composition et concentration) de la solution nutritive et du débit de distribution de cette solution.

L'air ambiant, qui occupe l'intérieur du local de forçage, est renouvelé en permanence et sa température est régulée de manière à être maintenue à un niveau sensiblement constant pendant toute la durée du forçage. Cette température correspond à une valeur optimale déterminée par des essais, qui varie avec l'époque de l'année. A titre indicatif, la température optimale est de l'ordre de 19°C en octobre, de 16°C en janvier et de 13°C en avril - mai.

Par température optimale on entend la température susceptible d'apporter le meilleur rendement possible, sans modification d'autres paramètres.

Dans certaines installations récentes, on contrôle également la température de la solution distribuée, ou - comme c'est le cas lorsqu'il existe plusieurs bacs d'approvisionnement - la température de chacune des solutions distribuées.

Des essais ont montré en effet que la température de la solution nutritive influait de manière significative sur les rendements, la température optimale pour la solution nutritive variant également, comme c'est le cas pour la température d'air, selon l'époque de l'année.

Dans ces installations, la régulation à température de la solution est effectuée pour chacun des bacs, grâce à un asservissement approprié de type connu, indépendamment de la régulation de l'air ambiant.

Ceci pose un problème pour l'utilisateur qui doit assez fréquemment modifier les valeurs de consignes de l'ensemble des systèmes de régulation, à savoir de chaque système de régulation d'un bac de solution et du système de régulation contrôlant la température d'air ambiante. Ces modifications doivent intervenir en principe au moins chaque mois pour tenir compte de l'époque de l'année, et aussi au moment du remplacement d'une famille d'endives qui est arrivée à maturité par une nouvelle famille destinée au forçage.

Il est par conséquent nécessaire pour le producteur de surveiller son installation de manière soutenue, ce qui est fastidieux et source d'erreurs et d'oublis.

En examinant des résultats d'essais relatifs au rendement de culture hydroponique d'endives, le demandeur s'est rendu compte que l'un des paramètres essentiels était la différence de température entre la température ambiante (température d'air du local de forçage) et la température de la solution nutritive. Dans certains cas, ce paramètre semble même plus important que les valeurs intrinsèques des températures de l'air ambiant et des solutions, à condition toutefois que celles-ci ne s'écartent pas excessivement des niveaux optimaux de température.

Par une autre observation, le demandeur a mis en évidence que les températures optimales de la solution nutritive et de l'air ambiant varient sensiblement de la même façon pendant une longue période. Ainsi, depuis les mois d'août - septembre, qui correspondent au début de la saison de forçage, jusqu'au mois de février, l'écart idéal entre la température de la solution et celle de l'air ambiant s'établit à environ 2°C, bien que, durant cette période, la température optimale de la solution décroisse assez rapidement, de 22°C à 17°C (la température optimale de l'air ambiant décroissant parallèlement de 20 à 15°C).

Partant de ces observations, le procédé qui fait l'objet de la présente invention se propose de réguler la température de la solution nutritive - ou des solutions, si l'installation est équipée de plusieurs bacs de nutrition distincts - non plus de manière isolée, mais en se référant à la température de l'air ambiant (dont la régulation peut continuer à se faire de manière traditionnelle), ceci par un asservissement qui tient compte de l'écart entre ces deux températures et de sa variation par rapport à une valeur de consigne.

Ainsi, pour programmer le système de régulation, l'utilisateur a seulement à manipuler les boutons de commande d'un seul système, afin d'y introduire d'une part la valeur de consigne de la température ambiante et d'autre part les écarts de température souhaités pour chacune des solutions nutritives, par rapport à cette température ambiante. Les écarts sont bien entendu exprimés en valeurs algébriques, la température de la solution nutritive pouvant dans certains cas être inférieure à la température ambiante.

Du fait qu'on a affaire à une commande groupée, et que les écarts de température ne doivent être modifiés qu'assez rarement, les risques d'oubli ou d'erreur se trouvent réduits.

Par ailleurs, s'il s'avère que la régulation d'air tombe en panne ou ait un fonctionnement défectueux, l'écart en température entre l'air et les solutions nutritives demeure néanmoins correct, ce qui - dans certaines limites - réduit sensiblement le risque de baisses de rendement importantes, voire de dégâts dans la culture.

L'installation, qui fait également l'objet de l'invention, et qui permet de mettre en oeuvre ce procédé, comprend au moins une première sonde de température placée dans le local et une seconde sonde de température en contact avec la solution nutritive, ces sondes étant reliées à un micro-processeur apte à piloter d'une part des moyens de contrôle en température du local, d'autre part des moyens de contrôle en température de la solution nutritive, le contrôle en température du local se faisant en fonction du calcul de la différence entre la température mesurée par la première sonde et une première valeur de consigne, tandis que le contrôle en température de la solution nutritive se fait en fonction du calcul de la différence entre l'écart entre les deux températures mesurées et une valeur de consigne.

Dans un mode de réalisation préférentiel de l'invention, l'installation comporte au moins un bac à niveau constant dans lequel est contenue la solution nutritive et sont logés la seconde sonde, ainsi que les moyens de contrôle en température de la solution. Avantageusement, il est prévu plusieurs bacs à niveau constant qui sont tous contrôlés en température par le micro-processeur, chacun indépendamment des autres, chaque bac alimentant une partie seulement des végétaux qui sont cultivés dans le local.

De préférence, il est prévu dans le local plusieurs sondes de température mesurant la température de l'air ambiant, le micro-processeur étant programmé pour calculer la moyenne des mesures des températures de l'ensemble des sondes.

De manière connue, l'installation est équipée de gaines de ventilation qui sont agencées pour assurer une distribution régulière d'air dans le local.

De préférence les moyens de contrôle en température du local sont placés à l'entrée de ces gaines et comprennent des trappes à ouvertures variables ainsi qu'un ventilateur, ces deux moyens étant adaptés pour contrôler le débit d'air susceptible d'être transféré de l'extérieur à l'intérieur du local.

D'autres caractéristiques et avantages de l'invention apparaîtront de la description et des dessins annexés qui en présentent un mode de réalisation préférentiel.

Sur ces dessins :
– la figure 1 est une vue de dessus très schématique d'un local de forçage d'endives et d'une installation conforme à l'invention équipant ce local ;
– la figure 2 est une vue de côté schématique et en coupe d'un bac contenant une solution nutritive et d'une pile de casiers contenant des endives en cours de forçage, cette figure illustrant le mode d'alimentation des endives en solution nutritive ;
– la figure 3 représente un organigramme de séquencement montrant le programme du micro-processeur chargé d'assurer la régulation.

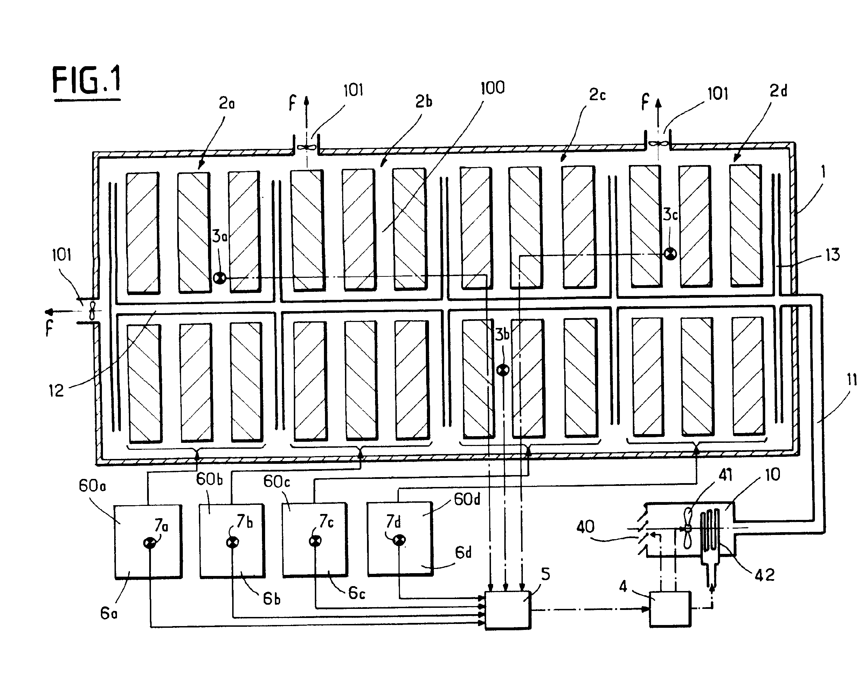

La figure 1 représente en vue de dessus un local de forçage d'endives qui comprend une paroi 1, par exemple rectangulaire, délimitant une enceinte 100. La paroi 1, ainsi que la toiture, non représentée, ont des bonnes caractéristiques d'isolation thermique. Ces éléments de construction sont en outre opaques, de manière à mettre l'intérieur de l'enceinte 100 à l'abri de la lumière, afin d'empêcher que les endives ne soient soumises au phénomène d'assimilation chlorophylienne, et qu'elles conservent une couleur blanche.

A l'intérieur du local, les endives sont stockées dans des casiers qui sont empilés les uns sur les autres et disposés pour former des travées, ces travées étant séparées par des couloirs qui permettent d'y accéder.

Dans l'exemple illustré, sont prévues vingt quatre travées qui sont groupées par quatre familles, référencées 2a, 2b, 2c et 2d de six travées. Chacune des travées contient des endives de même âge, c'est-à-dire arrivées à un niveau de maturité identique.

A l'extérieur du local 100 sont disposés quatre bacs 6a, 6b, 6c, 6d contenant chacun une solution nutritive 60a, 60b, 60c, 60d. A chaque bac est assignée une fonction d'alimentation d'une travée ayant le même indice a, b, c ou d.

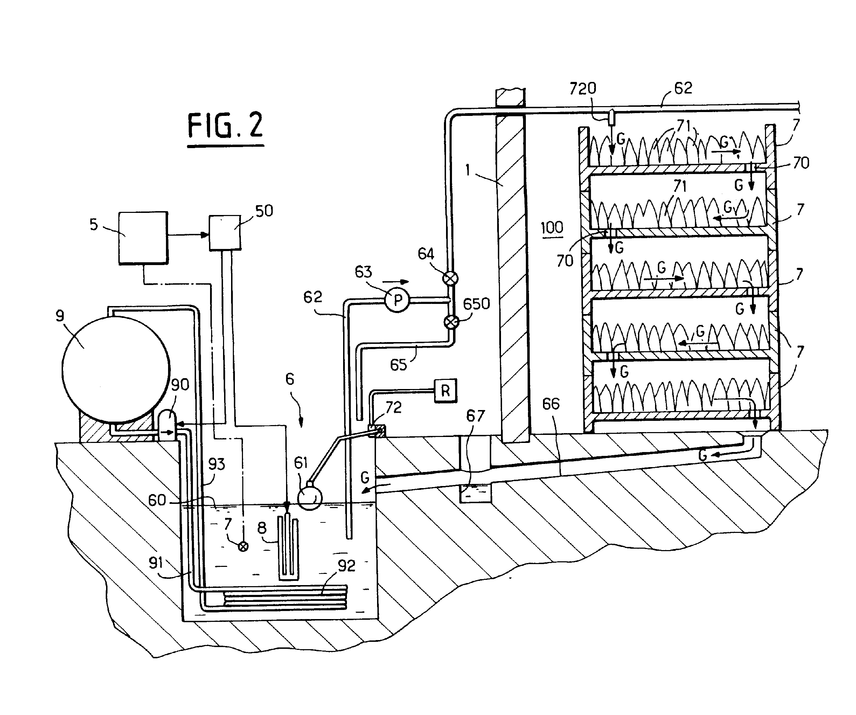

L'alimentation des endives en solution nutritive à partir d'un bac 6 sera expliqué plus loin en référence à la figure 2.

A l'intérieur du local 100 est installé un réseau de gaines de ventilation, destinées à amener de l'air prélévé à l'extérieur du local, et à le diffuser de manière homogène à l'intérieur du local. Ces gaines sont de préférence placées à une certaine hauteur par rapport au sol, et supportées par des éléments fixés au plafond. Il est prévu par exemple une gaine centrale 12 d'où partent sur les côtés des gaines secondaires 13 de plus petit diamètre. Ces gaines présentent des ouvertures autorisant l'échappement de l'air. La gaine 12 se prolonge à l'extérieur du bâtiment par un conduit 11 dont l'extrémité amont affecte la forme d'un caisson 10. Ce caisson contrôle l'admission d'air de l'extérieur du bâtiment au conduit 11, ceci grâce à une série de trappes 40 à ouverture variable et d'un ventilateur 41.

En ouvrant plus ou moins les trappes 40, dont le pilotage est par exemple effectué par un vérin, on peut régler le débit d'air entrant dans le caisson et donc à l'intérieur du local. Le débit peut encore être augmenté par mise en route du ventilateur 41 après que les trappes 40 aient été ouvertes.

Il est également prévu dans le caisson des moyens de chauffage tels qu'une résistance électrique 42 apte à élever rapidement et de manière contrôlée la température de l'air à l'intérieur du caisson.

Un circuit de puissance 4 assure le pilotage des trappes 40, la mise en route du ventilateur 41, et la mise en route de la résistance électrique 42, de manière appropriée dont la conception et la réalisation sont à la portée de l'homme du métier.

Le circuit de puissance 4 est lui-même commandé par un micro-processeur 5 selon un programme qui sera expliqué plus loin.

A l'intérieur du local 100 sont placées des sondes thermiques, par exemple au nombre de trois référencées 3a, 3b et 3c. Celles-ci sont régulièrement réparties à l'intérieur du local. Il s'agit de sondes d'un type connu en soi, aptes à fournir au micro-processeur 5 un signal qui est fonction de la température règnant à leur endroit.

De la même manière, il est prévu à l'intérieur de chacun des bacs 60 une sonde thermique 7a, 7b, 7c et 7d. Chacune d'entre elles fournit au micro-processeur 5 un signal qui est fonction de la température de la solution nutritive 60a, 60b, 60c ou, respectivement 60d, contenue dans le bac.

Enfin, il est prévu dans la paroi du local des moyens extracteurs 101 permettant un échappement de l'air de l'enceinte vers l'extérieur, afin de compenser l'apport d'air par les gaines 12, 13 et d'assurer un renouvellement permanent de l'air dans le local 100. Ces moyens extracteurs 101 peuvent consister, comme cela est bien connu, en une ouverture à laquelle est associé un ventilateur extracteur. A la figure 1 l'échappement de l'air est symbolisé par les flèches f.

Comme on le voit à la figure 2, les racines 71 en cours de forçage sont placées côte-à-côte dans des casiers empilables 7. Ces casiers ont un fond présentant une ouverture 70. De préférence, les ouvertures prévues ménagées dans les fonds de deux casiers superposés sont diagonalement opposées, ce qui permet d'assurer une circulation en chicane de la solution nutritive s'écoulant d'un casier au casier inférieur, comme cela est illustré par les flèches G à la figure 2.

L'alimentation des casiers se fait par des tuyauteries 62 passant au-dessus de l'ensemble des travées. Ces tuyauteries présentent des conduits de descente 620 surplombant chaque empilage de casiers 7. La solution nutritive 60 est prélevée dans un bac 6 situé à l'extérieur de l'enceinte, où elle est pompée au moyen d'une pompe 63. Sur la canalisation 62 est placée une vanne à débit variable 64. Une autre vanne 650 permet au besoin le retour de la solution au bac 6, via un conduit retour 65. Comme déjà dit, la disposition en quinquonce des ouvertures 70 permet une bonne irrigation de l'ensemble des racines d'endives stockées dans les casiers 7. La solution quittant le casier inférieur retourne par gravité dans le bac 6, en parcourant une gouttière inclinée 66, de préférence après passage dans une rigole de décantation 67 destinée à récupérer certaines impuretés.

La solution nutritive suit donc un circuit fermé.

Pour compenser les pertes en solution nutritive, le bac est à un niveau constant. A cet effet, il est prévu une vanne 72 branchée sur le réseau R d'alimentation en eau potable, cette vanne étant pilotée par un flotteur 61 comme cela est bien connu (principe du réservoir à chasse d'eau).

De temps en temps le bac est aussi réapprovisionné en agents nutritifs.

L'installation comprend une bonbonne 9 située près du bac 6 et contenant un agent réfrigérant, par exemple de l'eau à basse température. A l'intérieur du bac 6 est immergé un tube 92 en forme de serpentin, relié à la bonbonne 9 par des tubulures 91, 93. Une pompe 90 permet, lorsqu'elle est mise en route, de faire circuler l'agent réfrigérant à l'intérieur du serpentin 92, de manière à refroidir la solution 60.

Dans la solution 60 est immergée par ailleurs une résistance électrique 8, apte à chauffer la solution. La pompe 90 et la résistance chauffante 8 sont pilotées par un circuit de puissance 50 commandé par le micro-processeur 5. Enfin, comme on l'a déjà dit plus haut, une sonde thermique 7 immergée dans la solution 60 est branchée également au micro-processeur 5.

Nous allons maintenant expliquer, en nous référant à un exemple concret, de quelle manière s'opère une régulation en température au moyen de cette installation.

Nous allons supposer que, en fonction du moment de l'année et du niveau de développement des endives dans chacune des travées 2a, 2b, 2c et 2d, les températures optimales soient les suivantes :

– température d'air ambiant dans le local 100 : To = + 17°C ;

– température optimale de la solution 60a : To1 = + 19°C ;

– température optimale de la solution 60b : To2 = + 19°C ;

– température optimale de la solution 60c : To3 = + 18°C ;

– température optimale de la solution 60d : To4 = + 16°C.

Les écarts idéaux des températures de ces solutions par rapport à To sont donc respectivement :

$$Eo1 = + 2°C ; Eo2 = + 2°C ; Eo3 = + 1°C ;$$
$$Eo4 = - 1°C.$$

On suppose que la température extérieure est sensiblement plus basse que To, par exemple de l'ordre de 12°C.

En cours de fonctionnement, les sondes de la température d'air 3a, 3b, 3c vont mesurer des températures, dont le microprocesseur 5 va calculer la moyenne. Supposons qu'à un certain moment cette valeur soit T = + 18°C.

Cette température est supérieure à To, de sorte que le micro-processeur va tout d'abord commander le circuit de puissance 4 de façon à augmenter le débit d'air pénétrant dans le local. Pour cela, il va commander l'ouverture des trappes 40, sur une certaine course. Dans le cas où les trappes sont déjà ouvertes au maximum, il va commander la mise en route du ventilateur 41.

De l'air frais va donc pénétrer dans le local.

Le micro-processeur 5 va également calculer la valeur de l'écart entre les températures mesurées par les sondes 7 dans chacun des bacs et la température effective T de l'air ambiant.

Dans le cas présent, supposons que les sondes 7a, 7b, 7c et 7d donnent respectivement les mesures suivantes : t1 = + 18°C ; t2 = + 19°C ; t3 = + 19°C ; t4 = + 18°C.

On obtient alors les écarts suivants :

$$E1 = t1 - T = 0°C ;$$
$$E2 = t2 - T = + 1°C ;$$
$$E3 = t3 - T = + 1°C ;$$
$$E4 = t4 - T = 0°C.$$

Si on compare ces écarts avec les valeurs des consignes on constate que :

$$E1 < Eo1 ; E2 < Eo2 ; E3 = Eo3 ; E4 > Eo4.$$

Le circuit de puissance 50 est par conséquent commandé de manière à réchauffer les solutions 60a et 60b, ceci par mise en route des résistances chauffantes correspondantes 8, et à refroidir la solution 60d, ceci en mettant en route la pompe 90. La solution 60c est maintenue à sa température initiale.

On comprend aisément que, du fait qu'on va agir simultanément, ou presque, sur la température de l'air ambiant et sur la température de chacun des bacs, on va retrouver rapidement un écart de température correspondant à la valeur de consigne.

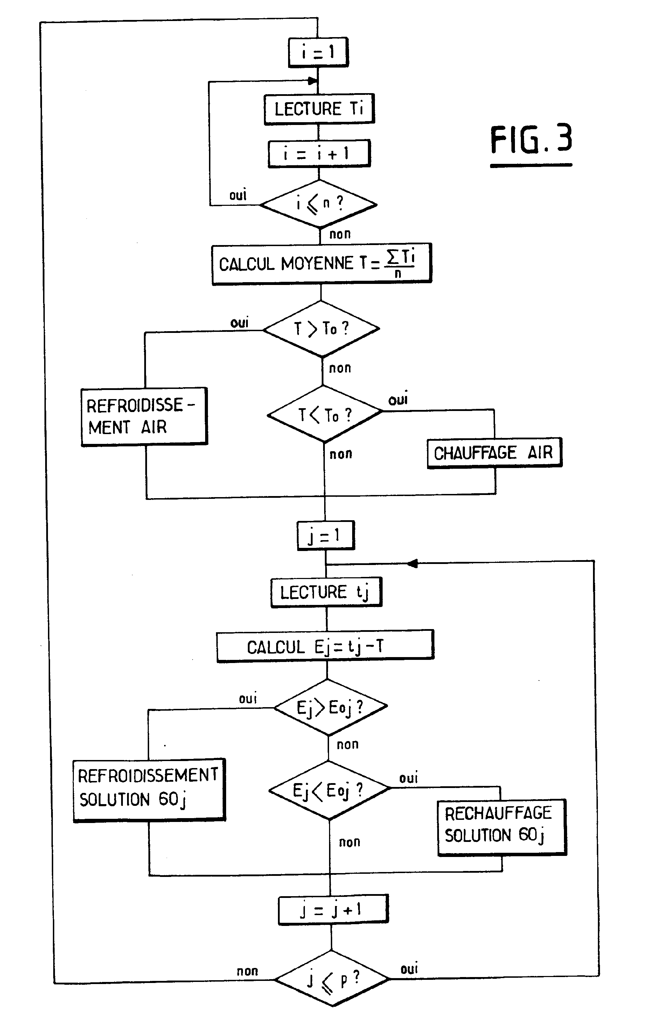

L'organigramme de la figure 3 reprend, de manière plus générale, le processus de régulation qui vient d'être décrit par référence à un exemple.

La lettre n̲ correspond au nombre de sondes 3 équipant le local, tandis que la lettre p̲ correspond au nombre de bacs (et de solutions nutritives différentes).

Dans le mode de réalisation qui vient d'être décrit, on a donc n = 3 et p = 4.

Le micro-processeur 5 commence par lire tour-à-tour les informations de températures d'ambiance Ti qui lui sont fournies par chacune des sondes 3. Il calcule ensuite la valeur moyenne de cette mesure, puis compare cette valeur avec la température de consigne To. Si T > To, il est nécessaire de refroidir l'air du local, et pour cela il commande l'ouverture des trappes 40 et éventuellement la mise en route du ventilateur 41.

Si au contraire T < To, il commande le cas échéant l'arrêt du ventilateur 41 et la fermeture des trappes 40. Dans ce cas, la température va augmenter naturellement à l'intérieur du local, du fait que la culture d'endives est exothermique.

Si ceci n'est pas suffisant, la résistance 42 peut être mise sous tension, de manière à réchauffer l'air qui rentre dans le local.

Dans une variante, il peut être prévu également pour contrôler le débit d'air, et corrélativement sa température, d'agir sur les moyens extracteurs 101.

L'air extrait du bâtiment peut être recyclé, en tout ou partie, par retour au caisson 10, les trappes 40 contrôlant alors le débit d'air recyclé.

Des moyens de chauffage ou de refroidissement additionnels peuvent également être prévus à l'intérieur du local.

Bien entendu, si T = To, la température à l'intérieur du local est satisfaisante, et il n'est procédé à aucune modification des conditions de la climatisation du local.

Le micro-processeur va ensuite lire successivement les mesures de température j qui lui sont fournies par chacune des sondes 7. Le micro-processeur calcule ensuite la différence Ej entre cette température tj et la température moyenne T mentionnée plus haut. L'écart Ej est une valeur algébrique, qui est positive ou négative.

Ensuite le micro-processeur compare Ej avec l'écart optimal qui a été introduit comme valeur de consigne dans le micro-processeur pour la solution 60j.

Si Ej > Eoj, il commande le refroidissement de la solution, en actionnant la pompe 90 qui fait circuler l'agent réfrigérant dans la solution. Si au contraire Ej < Eoj, il commande le réchauffage de la solution par mise sous tension de la résistance chauffante 8.

Ce processus est réitéré pour chaque sonde 7 et pour chacun des bacs correspondant, au nombre de p.

Ensuite, l'ensemble du processus est réitéré, soit immédiatement, soit un peu plus tard. La fréquence de mise en oeuvre de ce processus de régulation est par exemple de une fois par minute.

Si, comme cela arrive assez fréquemment, la valeur de consigne To doit être modifiée, alors que les valeurs Eo1, Eo2, Eo3, etc demeurent inchangées, l'opérateur ne doit effectuer qu'une seule intervention auprès du microprocesseur, en y introduisant la nouvelle valeur pour To.

Ceci réduit naturellement les risques d'erreurs.

Pour le contrôle en température de l'air, on pourrait prévoir additionnellement un groupe producteur de froid adapté pour être commandé par le micro-processeur 5, via le circuit de puissance 4 afin d'abaisser la température de l'air dans le local dans certaines conditions, notamment lorsque l'air extérieur se trouve à une température supérieure à To. Ce peut être le cas, en particulier en été ou dans certaines régions chaudes.

Bien que l'invention qui vient d'être présentée ait été conçue plus particulièrement en liaison avec le forçage d'endives, il va de soi qu'elle peut trouver place dans d'autres applications diverses, par exemple pour la culture de champignons.

## Revendications

1. Procédé de régulation en température pour une culture de végétaux (71) qui est pratiquée à l'intérieur d'un local (100) et dans laquelle les végétaux (71) sont alimentés en permanence au moyen d'une solution nutritive (60), selon lequel on effectue à la fois la régulation de la température (T) d'air du local et celle de la température (t) de la solution nutritive (60), caractérisé en ce que la régulation en température de la solution nutritive (60) est faite en référence à celle de l'air, par un asservissement tenant compte de l'écart (E) entre ces deux températures et de sa variation par rapport à une valeur de consigne (Eo).

2. Installation pour la mise en oeuvre du procédé selon la revendication 1, caractérisée par le fait qu'elle comprend au moins une première sonde de température (3) placée dans le local (100) et une seconde sonde de température (7) en contact avec la solution nutritive (60), ces sondes (3, 7) étant reliées à un micro-processeur (5) apte à piloter d'une part des moyens (40, 41, 42) de contrôle en température du local (100), d'autre part des moyens (8, 92) de contrôle en température de la solution nutritive (60), le contrôle en température du local se faisant en fonction du calcul de la différence entre la température (T) mesurée par ladite première sonde (3) et une première valeur de consigne (To), tandis que le contrôle en température de la solution nutritive se fait en fonction du calcul de la différence entre l'écart (E) entre les deux températures (t) et (T) mesurées et une valeur de consigne (Eo).

3. Installation selon la revendication 2, caractérisée par le fait qu'elle comporte au moins un bac (6) à niveau constant dans lequel est contenue la solution nutritive (60), et dans lequel sont logés ladite seconde sonde (7) ainsi que lesdits moyens (8, 92) de contrôle en température de la solution.

4. Installation selon la revendications 3, caractérisée par le fait que lesdits moyens de contrôle en température de la solution comprennent une résistance chauffante (8) et un serpentin tubulaire (92) dans lequel circule un agent réfrigérant.

5. Installation selon l'une des revendications 3 ou 4, caractérisée par le fait qu'elle comporte plusieurs bacs (6) à niveau constant, qui sont contrôlés en température par le micro-processeur (5) chacun indépendamment des autres, chaque bac (6) alimentant une partie seulement des végétaux cultivés dans le local (100).

6. Installation selon l'une des revendications 2 à 5, caractérisée par le fait qu'elle comporte plusieurs sondes de température (3a, 3b, 3c) réparties dans le local, le microprocesseur (5) étant programmé pour calculer la moyenne des mesures de températures de l'ensemble de ces sondes.

7. Installation selon l'une des revendications 2 à 6, caractérisée par le fait qu'elle comporte des gaines (11, 12, 13) assurant une distribution régulière d'air dans le local.

8. Installation selon la revendication 7, caractérisée par le fait que lesdits moyens de contrôle en température du local (100) sont placés à l'entrée desdites gaines de distribution (11, 12, 13) et comprennent des trappes à ouverture variable (40) et un ventilateur (41) qui contrôlent le débit d'air susceptible d'être transféré de l'extérieur à l'intérieur du local.

9. Installation selon l'une des revendications 1 à 8, destinée à équiper son local de forçage d'endives.

FIG.1

FIG. 2

# FIG.3

$i = 1$

LECTURE Ti

$i = i + 1$

$i \leqslant n$ ? — oui / non

CALCUL MOYENNE $T = \dfrac{\sum T_i}{n}$

$T > T_o$ ? — oui / non

REFROIDISSE-MENT AIR

$T < T_o$ ? — oui / non

CHAUFFAGE AIR

$j = 1$

LECTURE tj

CALCUL $E_j = t_j - T$

$E_j > E_{oj}$ ? — oui / non

REFROIDISSEMENT SOLUTION 60j

$E_j < E_{oj}$ ? — oui / non

RECHAUFFAGE SOLUTION 60j

$j = j + 1$

$j \leqslant P$ ? — non / oui

Office européen
des brevets

**RAPPORT DE RECHERCHE EUROPEENNE**

Numero de la demande

EP 92 46 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 142 989 (APPLIED AEROPONICS) <br> * page 3, ligne 3 - ligne 26 * <br> * page 8, ligne 13 - page 9, ligne 28; figure 1 * <br> --- | 1,2 | A01G31/02 |
| A | US-A-4 430 828 (OGLEVEE) <br> * revendication 1; figure 1 * <br> --- | 6 | |
| A | FR-A-2 621 448 (SECOMAT) <br> * abrégé; figure 1 * <br> --- | 7 | |
| A | FR-A-2 382 850 (CUVILLIER) <br> * page 1, ligne 1 - ligne 3 * <br> * page 2, ligne 19 - page 3, ligne 32; figure 1 * <br> ----- | 3,4,9 | |
| | | | **DOMAINES TECHNIQUES RECHERCHES (Int. Cl.5 )** <br><br> A01G |

Le présent rapport a été établi pour toutes les revendications

| Lieu de la recherche | Date d'achèvement de la recherche | Examinateur |
|---|---|---|
| LA HAYE | 29 MAI 1992 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&: membre de la même famille, document correspondant

EPO FORM 1503 03.82 (P0402)